# EUROPEAN PATENT SPECIFICATION

(11) **EP 3 892 234 B1**
(45) Date of publication and mention of the grant of the patent: **15.11.2023**
(21) Application number: 20168691.2
(22) Date of filing: 08.04.2020
(51) Int. Cl.: A61C 17/34, A61C 17/22, A46B 15/00, B26B 19/28, A61H 23/02

(54) **HANDLE FOR AN ELECTRICALLY OPERATED PERSONAL CARE IMPLEMENT AND PERSONAL CARE IMPLEMENT**
GRIFF FÜR EIN ELEKTRISCH BETRIEBENES KÖRPERPFLEGEGERÄT UND KÖRPERPFLEGEGERÄT
POIGNÉE POUR UN INSTRUMENT DE SOINS PERSONNELS ACTIONNÉ ÉLECTRIQUEMENT ET INSTRUMENT DE SOINS PERSONNELS

(43) Date of publication of application: 13.10.2021
(73) Proprietor: The Gillette Company LLC, Boston, Massachusetts 02127 (US)
(72) Inventor: JUNGNICKEL, Uwe, 61476 Kronberg (DE)
(74) Representative: P&G Patent Germany

(56) References cited:
- EP-A1- 0 481 553
- WO-A1-2019/157787
- US-A1- 2008 120 795
- US-A1- 2013 000 059

## Description

### FIELD OF THE INVENTION

The present disclosure is concerned with a handle for an electrically operated personal care implement, the handle comprising a pressure sensor. The present disclosure is further concerned with a personal care implement comprising such handle.

### BACKGROUND OF THE INVENTION

Personal care implements, like toothbrushes, are well known in the art. Generally, tufts of bristles for cleaning teeth are attached to a bristle carrier or mounting surface of a brush head intended for insertion into a user's oral cavity. A handle is usually attached to the head, which handle is held by the user during brushing.

Electrically operated toothbrushes exhibit the advantage that they assist users during brushing and may facilitate improved cleansing of the teeth and gums, in particular in hard to reach areas in the mouth.

Toothbrushes performing a vibration action usually have a motor located in the handle housing close to the head to allow the majority of vibrations to be transmitted to the head. The motor vibrates the entire handle and therewith also the brush head that is attached to the handle. However, the amplitude of vibrations at the brush head depends on the way the user holds the handle: With a softer grip, the handle can vibrate more extensively and therefore the user feels more vibrations on the teeth. However, if the user holds the handle tightly, vibrations will be significantly damped, and the brush head will vibrate less during use. Consequently, performance of a vibration toothbrush, including in-mouth perception during use is highly dependent on the user's behavior.

Also, it is widely known that many users generally apply too much force to the brush during the brushing process, in particular if they feel that not enough vibrations are transmitted to the head, and cleaning efficacy may be therefore reduced. However, if too much pressure is applied against the teeth and gums by cleaning elements of the toothbrush, health issues will arise. Negative health consequences comprise gum irritation, or over periods of time, gum recession or tooth enamel abrasion. Unfortunately, the presence of such issues may exacerbate the health condition in the mouth. Because some users may feel that these issues stem from poor cleaning, in an effort to correct the issues the users may apply even more force during brushing which in turn may cause more gum irritation and/or gum recession or tooth enamel abrasion.

In order to avoid or mitigate these issues, dental professionals may recommend the use of a soft bristled toothbrush. However, the use of a soft bristled toothbrush does not preclude the application of high brushing forces to the oral cavity. Furthermore, it is extremely difficult for an individual, when brushing, to determine the optimal force required for cleaning. While a user may apply a minimum level of force to enable cleaning, feeling the level at which the force is too high is difficult. In addition, studies have shown that the cleaning ability of a toothbrush may in fact be reduced if brushing force is increased to too high a level.

US2008120795 shows an electric toothbrush with a handle, a motor being mounted inside the handle at an end of a sleeve, the other end of a sleeve projects through an end of the handle, the drive shaft of the motor passes through the sleeve. A flexible section at the end of the handle allows the assembly of the motor, the drive shaft and the sleeve to pivot.

US2013000059 shows an electric toothbrush with a rocker projecting from the handle. Said rocker carries a motor, a gearing mechanism and a drive shaft and allows said elements to pivot with respect to the housing when force is applied on the brushhead.

It is an object of the present disclosure to provide a handle for an electrically operated personal care implement, e.g. a handle for a toothbrush, which overcomes at least one of the above-mentioned drawbacks, in particular which provides reliable vibration modes during use, independent from a user's gripping behavior. It is also an object of the present disclosure to provide a personal care implement comprising such handle.

### SUMMARY OF THE INVENTION

In accordance with one aspect, a handle for an electrically operated personal care implement is provided, the handle comprising:
- a housing comprising an inner cavity, the housing having a proximal end closest to a head repeatably attachable to and detachable from the handle, and a distal end, the distal end being opposite the proximal end,
- a pressure sensor comprising a pivot lever accommodated within the inner cavity,
- a motor comprising an eccentric weight for operating the personal care implement,
wherein the pivot lever is attached to the proximal end of the housing via a pivot axis, the pivot lever extending with a distal end towards the distal end of the housing, and the motor comprising the eccentric weight is attached to the distal end of the pivot lever, wherein the housing comprises an opening at the proximal end, and the pivot lever comprises a connector for repeatedly attaching and detaching the head to and from the handle, the connector extending through the opening, and the pivot lever (28) is unitarily formed with the connector (16).

In accordance with another aspect of the invention, a personal care implement is provided, the personal care implement comprising such handle and a head.

### BRIEF DESCRIPTION OF THE DRAWINGS

The invention is described in more detail below with reference to various embodiments and figures, wherein:
Fig. 1 shows a cross-sectional view of an example embodiment of a handle for an electrically operated personal care implement according to the present disclosure;
Fig. 2 shows a perspective view of a chassis inserted into the handle of Fig. 1, the cassis comprising a ring structure;
Fig. 3 shows a perspective view of the chassis of Fig. 2, the ring structure of the chassis being filled with a soft elastomeric material;
Fig. 4 shows a cross-sectional view of the filled ring structure of Fig. 3;
Fig. 5 shows an enlarged view of the proximal end of the handle of Fig. 1; and
Fig. 6 shows an enlarged section of the proximal end structure of the handle shown in Fig. 5.

### DETAILED DESCRIPTION OF THE INVENTION

The handle suitable to be used in connection with an electrically operated personal care implement comprises a housing with an inner cavity, the inner cavity being defined by an inner surface of the housing. The handle may be made from a hard plastic material, or from a metal material, for example stainless steel or aluminium. Such materials are highly durable and allow for slim product designs.

As used herein "personal care implement" refers to any implement which can be utilized for the purposes of personal hygiene. Some suitable examples include toothbrushes, flossers, tooth picks, razors, shavers, and trimmers. For example, the personal care implement may be battery-operated and may comprise a battery located in the inner cavity of the handle housing. The electrically operated personal care implement comprising such handle and a head may be an electrically operated toothbrush. The head may be repeatedly attachable to and detachable from the handle, e.g. via a snap-fit locking mechanism thereby providing sufficiently strong connection and stability between the head and the handle to enable a user to perform, e.g. a brushing action.

While the high-quality handle of the personal care implement may be adapted for use over a longer period of time as compared to common implements, like manual toothbrushes which are discarded after about three months of use, the relatively cheap head/brush refill can be exchanged on a regular basis, e.g. after about three months. This provides a cost-efficient and environmentally sustainable personal care implement providing both, high quality handle solutions as well as cost saving opportunities as only the head has to be exchanged/re-purchased and not the handle.

The housing has a proximal end and a distal end. The proximal end is defined as the end being closest to a head which is repeatably attachable to and detachable from the handle. The distal end is opposite the proximal end.

A motor with an eccentric weight for operating the personal care implement, and a pressure sensor comprising a pivot lever are accommodated within the inner cavity of the housing. The inner cavity may also accommodate an energy source, e.g. a battery, and/or other means for operating the personal care implement.

The pressure sensor comprises a pivot lever. The pivot lever is attached to the proximal end of the housing via a pivot axis, and extends with its distal end towards the distal end of the housing.

The motor comprising the eccentric weight for operating the personal care implement, is attached at the distal end of the pivot lever.

As the pivot lever is attached to the proximal end of the housing via a pivot axis so that the pivot lever can move independently from the housing, and the motor comprising the eccentric weight being attached at the distal end of the pivot lever, the vibrations generated by the motor can be directly guided to the brush head. Even if the housing is tightly fixed, the pivot lever will freely oscillate and transfer the vibrations to the brush head.

In-mouth perception and cleaning performance during brushing is enhanced. In contrast to common brush executions having a vibrating function (the motor vibrating the entire handle and therewith the head), the handle according to the present disclosure allows vibrations independent from the way the handle is hold by the user; the amplitude of the vibrations is less damped as the pivot lever can move independently from the housing.

The pivot lever is connected to the housing via a pivot axis at the upper end of the housing. While the brush head will be attached on a connector geometry of the pivot lever outside of the housing, the vibration motor is located at the other end of the pivot lever inside the housing. The pivot lever and/or the connector may be molded from a hard plastic material.

The housing comprises an opening at its proximal end, and the pivot lever comprises a connector for repeatedly attaching and detaching the head to and from the handle. The connector extends through the opening. The pivot lever is unitarily formed with the connector. In other words, while the pivot lever is connected to the housing via a pivot axis at the proximal end of the housing, the brush head is attached on a connector geometry of the pivot lever outside of the housing The motor comprising the eccentric weight is located at the other end of the pivot lever inside the housing to allow maximal generation of vibrations which can be transferred via the pivot lever to the head without significant absorption by the housing.

The pivot lever may activate a pressure sensor switch, e.g. arranged on a Printed Circuit Board Assembly (PCBA). If a predefined level of force, e.g. 5N or more, is applied onto the head of the personal care implement, the pivot lever pivots within the inner cavity of the handle; the pressure sensor switch comes in contact with the PCBA to trigger a light signal visible to a user. The PCBA mechanically supports and electrically connects electrical or electronic components using conductive tracks. Via the PCBA electrical communication between the energy source and a light emitting element, e.g. LED, can be provided if the pressure sensor switch comes in contact with the PCBA.

A light guide may transmit the light from the light emitting element to a light indication element provided at the proximal end of the handle. The light indication element may be a light ring extending 360° around the handle to form an outer surface of the handle. The light guide may be made from glass, polymethylmethacrylate, polycarbonate, copolyester, polypropylene, polyethyleneteraphthalate, or combinations thereof, e.g. polyester and polycarbonate.

The light guide may transmit electromagnetic energy, e.g. visible light, to the light indication element via internal reflection or external reflection. External reflections are defined as reflections where the light originates in a material of low refractive index (such as air) and reflects off of a material with a higher refractive index (such as aluminum or silver). A mirror operates on external reflection.

Internal reflections are defined as reflections where the light originates in a material of higher refractive index (such as polycarbonate) and reflects off of a material with lower refractive index (such as air or vacuum or water). Fiber optic technology operates on the principle of internal reflections.

The refractive index is defined as an optic attribute of any material which measures the tendency of light to refract, or bend, when passing through the material. Even materials that do not conduct light (such as aluminum) have indices of refraction. Typically, external reflections are most efficient when the angle of incidence of the light is near-normal (i.e., light approaches perpendicular to the surface) and degrade as the angle of incidence increases (approaches the surface at a steep angle). Conversely, internal reflections are most efficient at high angles of incidence and fail to reflect at shallow angles, e.g. normal to the surface. In order to achieve internal reflection, the angle of incidence should be greater than the critical angle. The critical angle is the angle below which light no longer reflects between a pair of materials.

If external reflection is utilized, a foil or some other highly reflective material can be used. The highly reflective material, e.g. foil, can be disposed on the interior surface of inner cavity. If internal reflection is utilized, a light guide/light path can be made from a material having high refractive index, e.g. above 1.0. For example, the material selected for the light guide may comprise a refractive index of greater than about 1.4, greater than about 1.5, greater than about 1.6, and/or less than about 1.7, less than about 1.6, or less than about 1.5. The material selected for the light guide may have a refractive index of between about 1.4 to about 1.6 to provide superior light transmission properties.

The handle may further comprise a ring structure connected to the housing at the proximal end by two flexible hinges, thereby leaving a circular gap between the ring structure and the housing. The ring structure may be injection molded from a hard plastic material. The ring structure may also be integrally molded with the housing, for example if the housing is made from e.g. PP, ABS or ASA. Alternatively, the ring structure may be provided as a separate chassis component, the chassis being inserted into the housing at the proximal end, e.g. if the housing is made from stainless steel or aluminium. The flexible hinges may be located close to the pivot axis of the pivot lever and may provide the ring structure with the same degree of freedom as the pivot lever. The pivot lever may be connected to the ring structure, e.g. by gluing.

The ring structure may be unitarily formed with the light guide to provide one component thereby providing more simplicity during manufacturing of the handle. The light guide may be transparent.

The gap between the housing and the ring structure may be filled with a soft elastomeric material (e.g. TPE), e.g. by over-molding. The elastomeric material may be transparent and/or translucent to emit and communicate light signals. The transparent and/or translucent soft elastomeric material may form the light indication element as discussed above. The soft elastomeric material may seal the handle, i.e. the gap between the ring structure and the housing in a substantially watertight manner.

If the soft elastomeric material is transparent/translucent, the elastic section can be used as a sealing and light indication element, to communicate certain signals from the personal care implement to the user. The elastomeric material can be illuminated e.g. by a LED via the light guide. If the transparent/translucent soft elastomeric material surrounds the entire circumference of the handle, the signal can be seen from any direction. This is especially beneficial for a product like an oral care implement that will be held in various orientations during use. For example, the user can get feedback in terms of pressure applied during brushing, timer information or information on the charging status of the battery.

In other words, during assembly of the handle the pivot lever can be connected to the ring structure in a watertight manner. Movement of the pivot lever is allowed by the use of a soft elastomeric material, defining an elastic section in the handle. Between the ring structure and the pivot lever a watertight connection can be realized e.g. by gluing. The elastomeric material allows for free movement of the pivot lever, while a watertight sealing between the housing and the pivot lever is provided.

The present structure of a handle for an electrically operated personal care implement allows for constant vibrations irrespective of how a user holds the handle and actual consumer usage. The handle is robust, and the soft elastomeric material allows the pivot lever to vibrate substantially independently from the housing. Also, the handle design according to the present disclosure does not create any dead volume in which water, toothpaste, and saliva can accumulate. In the past, such issues have been observed in connection with internal sealing elements that need to allow certain movement of component parts.

Also, a handle structure according to the present disclosure can be provided by conventional manufacturing techniques, like hard/soft over molding.

The outer wall of the housing may comprise a further opening provided along the longitudinal extension of the handle, e.g. a cut-out, to accommodate a switch assembly for activating the energy source, e.g. for switching the electronically operated personal care implement to an ON/OFF status. The switch assembly may be attached to the inner surface of the wall thereby sealing the opening provided in the wall.

The switch assembly for operating the implement may comprise a hard switch component and a soft switch component; the hard switch component comprising a frame with a recess. The frame of the hard switch component may be attached to the inner surface of the wall and surrounds the opening, while the recess of the frame provides/creates an undercut being open towards the opening to accommodate a portion of the soft switch component. The soft switch component may be positioned in the undercut provided by the recess and may be arranged in a manner that it covers at least partially the opening.

Typical housings for electrical, handheld devices according to the art are usually made from plastic materials. While the housing itself is molded out of hard-plastic material, like PP or ABS, such devices often comprise a switch area molded out of soft elastomeric material, like TPE to form a membrane that allows the actuation of a switch located inside the housing. By over-molding the soft component on the hard-plastic housing a waterproof housing assembly can only be achieved, if the right material combination and geometry is selected; sufficient bonding properties between the hard and the soft component are crucial.

However, if a slim overall product design with a housing made from metal having small wall dimensions is to be provided, a waterproof assembly cannot be ensured by simply over-molding the soft component onto the metal housing as the bonding area is not sufficiently large (due to the low wall thickness and reduced freedom to design such metal tube housing vs. free-formed plastic parts).

To enable the provision of a waterproof switch assembly (i.e. a durable and waterproof sealing/bonding between the switch assembly and the metal material) in connection with a metal tube housing having small wall dimensions (e.g. between 0.4 mm and about 1.2 mm) without the need of using separate sealing elements, the present disclosure suggests a switch assembly comprising a hard switch component and a soft switch component as discussed above. The hard switch component may comprise a frame with a recess which in turn creates an undercut when attached to the inner surface of the housing. The frame surrounds the opening while the undercut provided between the recess and the inner wall surface is open towards the opening. The soft switch component may be positioned in said undercut thereby being supported by the opposing walls of the recess and inner wall surface, respectively. The hard switch component may be fixed within the housing by means of gluing and/or by other means, including but not limited to substance-to-substance bonds, mechanically interlocking or frictional connections. The soft switch component may be provided by over-molding. The hard switch component can be further supported by a chassis inserted into the inner cavity of the housing. The chassis may comprise a carrier holding components for electrically operating the personal care implement, e.g. motor, electronics and the energy source, for example the battery.

The recess of the frame of the hard switch component forming the undercut allows for solid anchoring of the soft switch component. Neither a force applied from the outside of the housing onto the switch component, nor a force applied from the inside of the housing results in significant peel stress on the bonding area as the frame provides a counterforce and holds the soft switch component in place. A switch assembly according to the present disclosure can be seamlessly integrated into the opening in the housing and can seal the opening in a substantially waterproof manner. Such design prevents water, toothpaste and saliva from entering the housing; a hygienic electrically operated personal care implement can be provided.

In contrast to the present disclosure, simply over-molding the soft switch component onto a metal tube housing could not provide a durable waterproof handle housing as the bonding force between the soft switch component and the metal tube housing is not sufficiently strong; the bonding area between the two components (soft switch component and metal tube housing) is not sufficiently large and no counterforce is provided to hold the soft switch component in place. If a force is applied onto the switch component to activate the electrically operated implement, peel stress occurs in the bonding area which significantly weakens the bonding connection. A weakened bonding connection may cause fine cracks or crevices allowing water to enter the inner cavity of the handle metal tube housing.

The hard switch component of the present disclosure may be made from hard-plastic material, e.g. from acrylonitrile butadiene styrene (ABS) and/or acrylonitrile styrene acrylate (ASA), while the soft switch component may be made from soft elastomeric material, e.g. from thermoplastic elastomers (TPE).

The opening accommodating the switch assembly in the housing may be, e.g. a cut-out provided in the metal wall by laser cutting. The metal wall circumferencing the opening may define an angle α between its outer surface and the neighboring surface/side wall of 90° or less. If angle α is less than 90°, the bonding area between the metal wall and the soft switch component is slightly increases which results in even better bonding properties.

The frame of the hard switch component may comprise at least two protrusions for precisely positioning/centering the hard switch component onto the inner surface of the metal wall during assembling. Such protrusions may help to define the position of the hard switch component in respect to the metal tube housing thereby facilitating manufacturing.

The handle may comprise magnetic/ferromagnetic material which may allow for hygienic storage of the personal care implement by magnetically attaching the handle to a magnetic holder, e.g. provided at a wall. If the personal care implement is a toothbrush, remaining water, toothpaste slurry and saliva can drain off from the brush. The implement can dry relatively quickly. Consequently, bacteria growth can significantly be reduced, thereby rendering the oral care implement more hygienic. In contrast to a common toothbrush being stored in a toothbrush beaker where drained fluids get collected and accumulated at the bottom of the beaker, the brush according to the present disclosure is exposed to wet conditions over a significantly shorter period of time.

The magnetic holder may have the form of a flat disk attachable to a wall. Such flat disk may represent an easy to clean surface. Further, a user just needs to bring the oral care implement in close proximity to the magnetic holder, and then the oral care implement gets attached automatically. No precise positioning or threading as with common toothbrush holders is required. If the magnetic properties are merely provided in the handle, and not in the head, the head portion cannot accidentally be attached to the magnetic holder, thereby reducing the risk that the magnetic holder gets soiled.

The handle or part of the handle may be electroplated to add improved appearance and a pleasant feel. Thermoplastic elastomers are well suited for electroplating as they allow for the creation of both hard and soft composite components to be electroplated selectively in one operation.

For example, the handle may comprise a thumb rest being made from a thermoplastic elastomer material and/or from a polypropylene material. Such thumb rest may provide the handle with improved handling properties, e.g. with anti-slip properties to improve maneuverability of the personal care implement under wet conditions, e.g. when the user brushes his teeth. The thumb rest may be made from thermoplastic elastomer material having a Shore A hardness from about 30 to about 60, or about 40 to prevent the oral care implement from being too slippery when used in wet conditions. At least a portion of the thumb rest may have a concave shape with an angle α with respect to the area of the remaining portion of the thumb rest from about 20° to about 25°, or about 24°. The thumb rest or a gripping region may be attached onto the front surface of the handle in the region close to the proximal end, i.e. closest to the head. The thumb rest may comprise a plurality of ribs, e.g. extending substantially perpendicular, parallel or diagonal to the longitudinal axis of the oral care implement. Such ribs may allow users/consumers to use the oral care implement with even more control. The user/consumer can better grasp and manipulate the handle of the oral care implement during brushing. Such handle may provide further improved control and greater comfort during brushing, in particular under wet conditions.

Thermoplastic elastomer material may form the thumb rest on the front surface of the oral care implement and/or a palm grip on the back surface being opposite the front surface to be gripped by the user's/consumer's fingers and thumb. Such handle configuration may even further resist slippage during use.

If the personal care implement is a toothbrush, tooth cleaning elements, e.g. bundle of filaments forming one or a plurality of tufts, may be attached to the toothbrush head by means of a hot tufting process. One method of manufacturing the head with tufts of filaments embedded in the head may comprise the following steps: In a first step, tufts are formed by providing a desired amount of filaments. In a second step, the tufts are placed into a mold cavity so that ends of the filaments which are supposed to be attached to the head extend into said cavity. The opposite ends of the filaments not extending into said cavity may be either end-rounded or non-end-rounded. For example, the filaments may be not end-rounded in case the filaments are tapered filaments having a pointed tip. In a third step the head is formed around the ends of the filaments extending into the mold cavity by an injection molding process, thereby anchoring the tufts in the head. Alternatively, the tufts may be anchored by forming a first part of the head - a so called "sealplate" - around the ends of the filaments extending into the mold cavity by an injection molding process before the remaining part of the oral care implement is formed. Before starting the injection molding process the ends of the tufts extending into the mold cavity may be optionally melted or fusion-bonded to join the filaments together in a fused mass or ball so that the fused masses or balls are located within the cavity. The tufts may be held in the mold cavity by a mold bar having blind holes that correspond to the desired position of the tufts on the finished head of the oral care implement. In other words, the tufts attached to the head by means of a hot tufting process are not doubled over a middle portion along their length and are not mounted in the head by using an anchor/staple. The tufts are mounted on the head by means of an anchor-free tufting process.

Alternatively, the head for the oral care implement may be provided with a bristle carrier having at least one tuft hole, e.g. a blind-end bore. A tuft comprising a plurality of filaments may be fixed/anchored in said tuft hole by a stapling process/anchor tufting method. This means, that the filaments of the tuft are bent/folded around an anchor, e.g. an anchor wire or anchor plate, for example made of metal, in a substantially U-shaped manner. The filaments together with the anchor are pushed into the tuft hole so that the anchor penetrates into opposing side walls of the tuft hole thereby anchoring/fixing/fastening the filaments to the bristle carrier. The anchor may be fixed in opposing side walls by positive and frictional engagement. In case the tuft hole is a blind-end bore, the anchor holds the filaments against a bottom of the bore. In other words, the anchor may lie over the U-shaped bend in a substantially perpendicular manner. Since the filaments of the tuft are bent around the anchor in a substantially U-shaped configuration, a first limb and a second limb of each filament extend from the bristle carrier in a filament direction. Filament types which can be used/are suitable for usage in a stapling process are also called "two-sided filaments". Heads for oral care implements which are manufactured by a stapling process can be provided in a relatively low-cost and time-efficient manner.

The following is a non-limiting discussion of an example embodiment of an oral care implement and parts thereof in accordance with the present disclosure, where reference to the Figures is made.

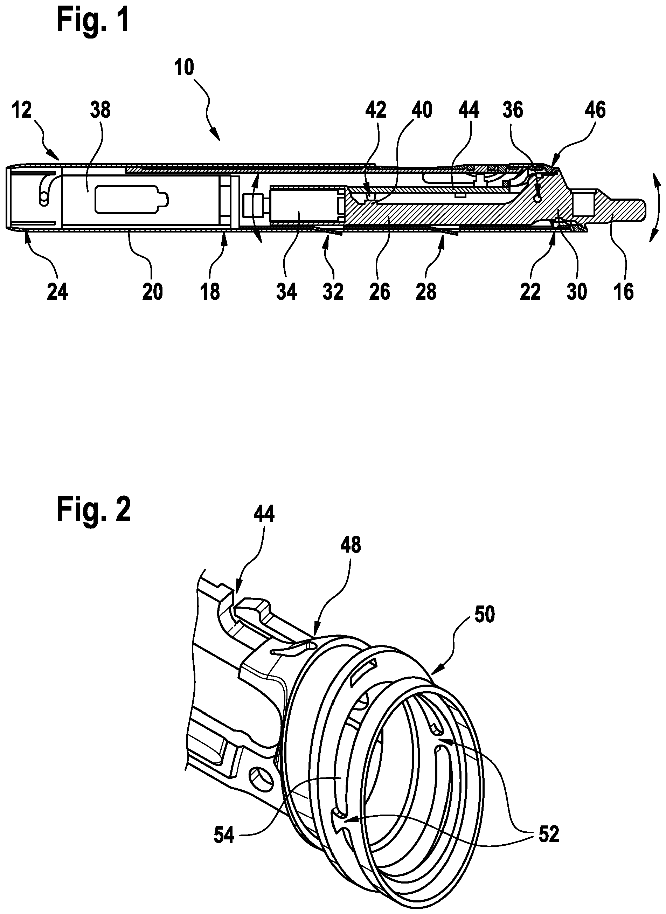

Fig. 1 shows a personal care implement 10, in this specific embodiment an electrically operated oral care implement, i.e. toothbrush 10. Toothbrush 10 comprises a handle 12 and a head (not shown) being repeatedly attachable to and detachable from the handle 12, by means of connector 16. The connector 16 may comprise a spring-loaded ball element comprising a ball and a spring, the spring applying a radial force onto the ball in a direction towards an outer lateral surface of the connector. The ball may be insertable into a recess provided in a hollow portion of the head to securely fix the head onto the handle.

The handle 12 comprises a housing 20 defining an inner cavity 18. The housing 20 has a proximal end 22 closest to the head, and a distal end 24. The distal end 24 is opposite the proximal end 22.

A pressure sensor 26 comprising a pivot lever 28 is accommodated within the inner cavity 18 of the housing 20. The pivot lever 28 is unitarily formed with the connector 18. While connector 18 extends through an opening 30 provided at the proximal end 22 of the housing 20, a distal end 32 of the pivot lever 28 extends in the direction of the distal end 24 of the housing 20. The pivot lever 20 and the connector 16 may be unitarily molded from a hard plastic material.

A motor 34 comprising an eccentric weight for operating the personal care implement 10 is attached to the distal end 32 of the pivot lever 28.

A battery for operating the personal care implement 10 is also accommodated within the inner cavity 18 of the housing 20.

The pivot lever 28 activates a pressure sensor switch 40, e.g. arranged on a Printed Circuit Board Assembly (PCBA) 42. If a predefined level of force, e.g. 5N or more, is applied onto the head of the personal care implement 10, the pivot lever 28 pivots and comes in contact with the PCBA 42 to trigger a light signal visible to a user. Via the PCBA 42 electrical communication between the battery 38 as an example for an energy source, and a light emitting element, e.g. LED, is provided.

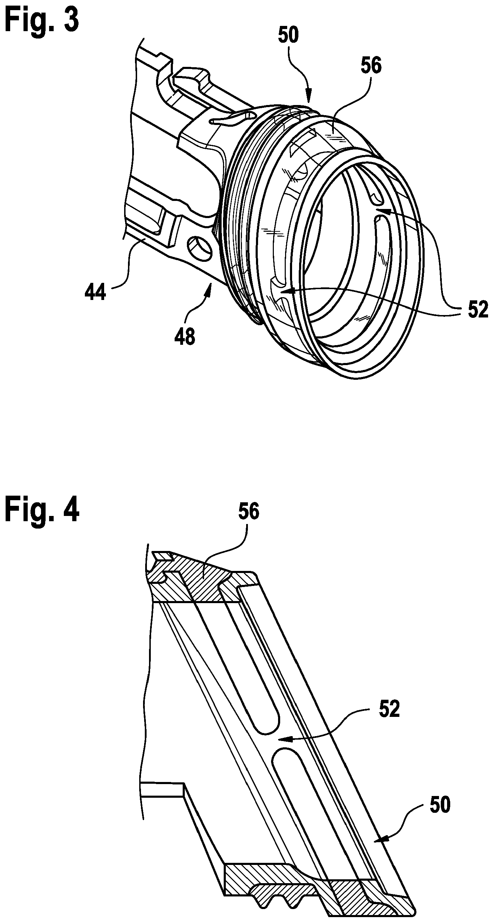

A light guide 44 can transmit the light form the light emitting element to a light indication element 46 (see Fig. 3) provided at the proximal end 22 of the handle 12. The light indication element 46 may be a light ring 46 extending 360° around the handle 12 and forms an outer surface of the handle 12.

Fig. 2 shows a perspective view of a chassis 48 inserted into the handle (see Fig. 1) via the opening 30 provided in the housing 20 at the proximal end 22. The cassis 48 comprises the light guide 44 and a ring structure 50, the light guide 44 and the ring structure 50 being unitarily molded from a hard plastic material. The pivot lever 32 is connected to the ring structure 50 to provide a certain degree of movement.

The ring structure 50 itself is connected to the housing 20 at the proximal end 22 by two flexible hinges 52, thereby leaving a circular gap 54 between the ring structure 50 and the housing 20.

As shown in Fig. 3, the gap 54 between the ring structure 50 and the housing 20 is filled, e.g. over-molded, by a transparent or translucent soft elastomeric material 56, preferably TPE, to provide a light indication element 56 for communicating light signals received from the light guide 44. The soft elastomeric material 56 seals the housing 20 in a substantially watertight manner, while still providing sufficient freedom of movement to allow the pivot lever 28 uniformly molded with the connector 16 to flex.

Fig. 4 shows a cross-sectional view of the ring structure 50 filled, e.g. over-molded with transparent material 56.

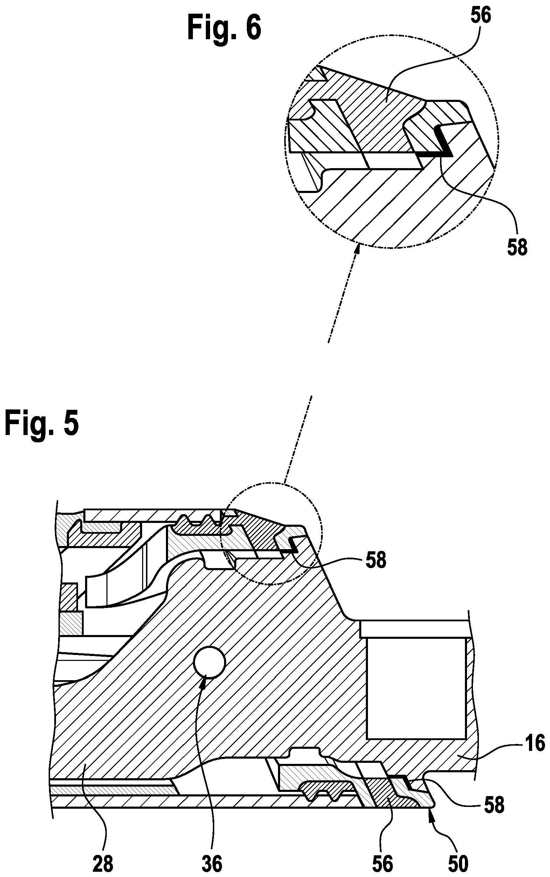

Figs. 5 and 6 show enlarged views of the proximal end 22 of the handle 12 wherein the pressure sensor 26 comprising the pivot lever 28 and connector 16 is inserted into the housing 20.

In other words, during assembly of the handle the pivot lever 28 can be connected to the ring structure 50 in a watertight manner. Movement of the pivot lever 28 is allowed by the use of the soft elastomeric material 56, defining an elastic section 56 in the handle 12. Between the ring structure 50 and the pivot lever 28 a watertight connection 58 can be realized e.g. by gluing. The elastomeric material 56 allows for free movement of the pivot lever 28, while a watertight sealing between the housing 20 and the pivot lever 28 is provided.

As shown in Fig. 1, the handle also comprises a switch assembly 60 located in the housing 20 for activating the energy source/battery 38 so that the electrical toothbrush 10 is operational. Electrical toothbrush 10 can be switched in an ON/OFF status by actuating the switch assembly 60.

The switch assembly 60 for activating the energy source/battery 38 comprises hard switch component 62 and soft switch component 64. Both, the hard and the soft switch components 62, 64 are located within an opening 66 provided in the housing 20. The hard and soft switch components 62, 64 are arranged in a manner that the switch assembly 60 seals the opening 66 in a substantially waterproof manner.

While hard switch component 62 may be molded from hard-plastic material, e.g. from acrylonitrile butadiene styrene (ABS) and/or acrylonitrile styrene acrylate (ASA), soft switch component 64 may be made from soft elastomeric material, e.g. from thermoplastic elastomers (TPE). TPE adheres well to metal material as well as to ABS and ASA.

The hard switch component 62 comprises a frame with a recess, the frame being attached to the inner surface of the housing 20 thereby surrounding/circumferencing the opening 66. The recess creates an undercut in which the soft switch component 64 is positioned and securely fixed. The hard switch component 62 may be connected to the inner surface of the housing 20 by gluing. Fixation of the hard switch component 62 on the inner surface may alternatively be provided by means of substance-to-substance bonds, mechanically interlocking or frictional connections.

The frame of the hard switch component 62 may comprise protrusions that help positioning the hard switch component 62 onto the inner surface of the housing 20; to this end the inner surface may comprise respective recesses to receive said protrusions.

The hard switch component 62 may further comprise a lever arm comprising a button element at the distal end of the lever arm. The lever arm and the button element may extend into the opening 66.

The material forming the soft switch component 64 may be over-molded over the lever arm and partially over the button element thereby keeping a portion of the button element exposed to provide an indication where a user should place his finger to activate switch assembly 60. To this end, the color of the material of the hard switch component 62 and the color of the material of the soft switch component 64 may be different to provide a clear and easily visible indication. The material of the soft switch component 64 covers any remaining open area of the opening 66 and is fixed in the undercut provided between recess and inner surface of the housing 20. By over-molding the soft switch component 64, a substantially waterproof and durable seal can be provided which may prevent water, toothpaste and/or saliva from entering the inner cavity 18 of the housing 20.

In the context of this disclosure, the term "substantially" refers to an arrangement of elements or features that, while in theory would be expected to exhibit exact correspondence or behavior, may, in practice embody something slightly less than exact. As such, the term denotes the degree by which a quantitative value, measurement or other related representation may vary from a stated reference without resulting in a change in the basic function of the subject matter at issue.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A handle (12) for an electrically operated personal care implement (10), the handle (12) comprising:
- a housing (20) comprising an inner cavity (18), the housing (20) having a proximal end (22) closest to a head repeatably attachable to and detachable from the handle (12), and a distal end (24), the distal end (24) being opposite the proximal end (22),
- a pressure sensor (26) comprising a pivot lever (28) accommodated within the inner cavity (18),
- a motor (34) comprising an eccentric weight for operating the personal care implement (10), wherein
the pivot lever (28) is attached to the proximal end (22) of the housing (20) via a pivot axis (36), the pivot lever (28) extending with a distal end (32) towards the distal end (24) of the housing (20), and
the motor (34) comprising the eccentric weight is attached to the distal end (32) of the pivot lever (28), wherein the housing (20) comprises an opening (30) at the proximal end (22), and the pivot lever (28) comprises a connector (16) for repeatedly attaching and detaching the head to and from the handle (12), the connector (16) extending through the opening (30), and the pivot lever (28) is unitarily formed with the connector (16).

2. A handle (12) of claim 1, wherein the pivot lever (28) is molded from a hard plastic material.

3. A handle (12) of any of the proceeding claims, wherein the inner cavity (18) of the housing (20) comprises an energy source (38), preferably a battery, for operating the personal care implement (10).

4. A handle (12) of any of the preceding claims, wherein the housing (20) comprises a ring structure (50) connected to the housing (20) at the proximal end (22) by two flexible hinges (52), thereby leaving a circular gap (54) between the ring structure (50) and the housing (20).

5. A handle (12) of claim 4, wherein the ring structure (50) is unitarily formed with the housing (20) or provided as a separate chassis component (48), the chassis (48) being inserted into the housing (20) at the proximal end (22).

6. A handle (12) of claim 4 or 5, wherein the gap (54) between the ring structure (50) and the housing (20) is filled, preferably over-molded, by a soft elastomeric material (56), preferably TPE.

7. A handle (12) of claim 5 or 6, wherein the ring structure (50) is unitarily formed with a transparent light guide component (44).

8. A handle (12) of claim 6 or 7, wherein the soft elastomeric material (56) is transparent and/or translucent to communicate light signals.

9. A handle (12) of any of the preceding claims 4-8, wherein the pivot lever (28) is connected to the ring structure (50), preferably by gluing.

10. A handle (12) of any of the preceding claims 6-9, wherein the soft elastomeric material (56) seals the housing (20) in a substantially watertight manner.

11. A personal care implement (10) comprising a handle (12) according to any of the preceding claims and a head.

12. A personal care implement (10) according to claim 11, wherein the implement (10) is an electrically operated toothbrush (10).

13. A personal care implement (10) according to claim 11 or 12, wherein the head is repeatedly attachable to and detachable from the handle (12).

## Patentansprüche

1. Griff (12) für ein elektrisch betriebenes Körperpflegehilfsmittel (10), der Griff (12) umfassend:
- ein Gehäuse (20), umfassend einen Innenhohlraum (18), wobei das Gehäuse (20) ein proximales Ende (22), das einem Kopfstück, das wiederholbar an dem Griff (12) anbringbar und von diesem abnehmbar ist, am nächsten ist, und ein distales Ende (24) aufweist, wobei das distale Ende (24) dem proximalen Ende (22) gegenüberliegt,
- einen Drucksensor (26), umfassend einen Drehhebel (28), der innerhalb des Innenhohlraums (18) untergebracht ist,
- einen Motor (34), umfassend ein exzentrisches Gewicht zum Betreiben des Körperpflegehilfsmittels (10), wobei
der Drehhebel (28) mittels einer Drehachse (36) an dem proximalen Ende (22) des Gehäuses (20) angebracht ist, wobei sich der Drehhebel (28) mit einem distalen Ende (32) zu dem distalen Ende (24) des Gehäuses (20) hin erstreckt und der Motor (34), umfassend das exzentrische Gewicht, an dem distalen Ende (32) des Drehhebels (28) angebracht ist, wobei das Gehäuse (20) eine Öffnung (30) an dem proximalen Ende (22) umfasst, und der Drehhebel (28) einen Verbinder (16) zum wiederholten Anbringen und Abnehmen des Kopfstücks an und von dem Griff (12) umfasst, wobei sich der Verbinder (16) über die Öffnung (30) erstreckt und der Drehhebel (28) mit dem Verbinder (16) einstückig ausgebildet ist.

2. Griff (12) nach Anspruch 1, wobei der Drehhebel (28) aus einem harten Kunststoffmaterial gegossen ist.

3. Griff (12) nach einem der vorstehenden Ansprüche, wobei der Innenhohlraum (18) des Gehäuses (20) eine Energiequelle (38), vorzugsweise eine Batterie, zum Betreiben des Körperpflegehilfsmittels (10) umfasst.

4. Griff (12) nach einem der vorstehenden Ansprüche, wobei das Gehäuse (20) eine Ringstruktur (50), die mit dem Gehäuse (20) an dem proximalen Ende (22) durch zwei flexible Scharniere (52) verbunden ist, umfasst, wobei dadurch ein kreisförmiger Spalt (54) zwischen der Ringstruktur (50) und dem Gehäuse (20) zurückgelassen wird.

5. Griff (12) nach Anspruch 4, wobei die Ringstruktur (50) mit dem Gehäuse (20) einstückig ausgebildet oder als ein separates Grundeinheitsbestandteil (48) bereitgestellt ist, wobei die Grundeinheit (48) an dem proximalen Ende (22) in das Gehäuse (20) eingesetzt wird.

6. Griff (12) nach Anspruch 4 oder 5, wobei der Spalt (54) zwischen der Ringstruktur (50) und dem Gehäuse (20) durch ein weiches Elastomermaterial (56), vorzugsweise TPE, gefüllt, vorzugsweise umgossen wird.

7. Griff (12) nach Anspruch einem der Ansprüche 5 bis 6, wobei die Ringstruktur (50) mit einem durchsichtigen Lichtführungsbestandteil (44) einstückig ausgebildet ist.

8. Griff (12) nach Anspruch 6 oder 7, wobei das weiche Elastomermaterial (56) durchsichtig und/oder durchscheinend ist, um Lichtsignale zu kommunizieren.

9. Griff (12) nach einem der vorstehenden Ansprüche 4 bis 8, wobei der Drehhebel (28) mit der Ringstruktur (50), vorzugsweise durch ein Kleben, verbunden ist.

10. Griff (12) nach einem der vorstehenden Ansprüche 6 bis 9, wobei das weiche Elastomermaterial (56) das Gehäuse (20) in einer im Wesentlichen wasserdichten Weise abdichtet.

11. Körperpflegehilfsmittel (10), umfassend einen Griff (12) nach einem der vorstehenden Ansprüche und ein Kopfstück.

12. Körperpflegehilfsmittel (10) nach Anspruch 11, wobei das Hilfsmittel (10) eine elektrisch betriebene Zahnbürste (10) ist.

13. Körperpflegehilfsmittel (10) nach Anspruch 11 oder 12, wobei das Kopfstück wiederholbar an dem Griff (12) anbringbar und von diesem abnehmbar ist.

## Revendications

1. Poignée (12) pour un instrument de soins personnels à commande électrique (10), la poignée (12) comprenant :
- un corps (20) comprenant une cavité interne (18), le corps (20) ayant une extrémité proximale (22) la plus proche d'une tête pouvant être de manière répétée attachée à et détachée de la poignée (12), et une extrémité distale (24), l'extrémité distale (24) étant à l'opposé de l'extrémité proximale (22),
- un capteur de pression (26) comprenant un levier de pivot (28) logé à l'intérieur de la cavité interne (18),
- un moteur (34) comprenant un poids excentrique pour l'actionnement de l'instrument de soins personnels (10), dans laquelle
le levier de pivot (28) est attaché à l'extrémité proximale (22) du corps (20) par le biais d'un axe de pivot (36), le levier de pivot (28) s'étendant avec une extrémité distale (32) vers l'extrémité distale (24) du corps (20), et le moteur (34) comprenant le poids excentrique est attaché à l'extrémité distale (32) du levier de pivot (28), dans laquelle le corps (20) comprend une ouverture (30) au niveau de l'extrémité proximale (22), et le levier de pivot (28) comprend un connecteur (16) pour attacher et détacher de manière répétée la tête à et de la poignée (12), le connecteur (16) s'étendant à travers l'ouverture (30), et le levier de pivot (28) est formé en une seule pièce avec le connecteur (16).

2. Poignée (12) selon la revendication 1, dans laquelle le levier de pivot (28) est moulé à partir d'un matériau plastique dur.

3. Poignée (12) selon l'une quelconque des revendications précédentes, dans laquelle la cavité interne (18) du corps (20) comprend une source d'énergie (38), de préférence une batterie, pour l'actionnement de l'instrument de soins personnels (10).

4. Poignée (12) selon l'une quelconque des revendications précédentes, dans laquelle le corps (20) comprend une structure annulaire (50) reliée au corps (20) au niveau de l'extrémité proximale (22) par deux articulations flexibles (52), laissant ainsi un espace circulaire (54) entre la structure annulaire (50) et le corps (20).

5. Poignée (12) selon la revendication 4, dans laquelle la structure annulaire (50) est formée en une seule pièce avec le corps (20) ou fournie en guise de composant de châssis indépendant (48), le châssis (48) étant inséré dans le corps (20) au niveau de l'extrémité proximale (22).

6. Poignée (12) selon la revendication 4 ou 5, dans laquelle l'espace (54) entre la structure annulaire (50) et le corps (20) est rempli, de préférence surmoulé, par un matériau élastomère souple (56), de préférence TPE.

7. Poignée (12) selon la revendication 5 ou 6, dans laquelle la structure annulaire (50) est formée en une seule pièce avec un composant de guidage de lumière transparent (44).

8. Poignée (12) selon la revendication 6 ou 7, dans laquelle le matériau élastomère souple (56) est transparent et/ou translucide pour communiquer des signaux lumineux.

9. Poignée (12) selon l'une quelconque des revendications précédentes 4 à 8, dans laquelle le levier de pivot (28) est relié à la structure annulaire (50), de préférence par collage.

10. Poignée (12) selon l'une quelconque des revendications précédentes 6 à 9, dans laquelle le matériau élastomère souple (56) scelle le corps (20) d'une manière sensiblement étanche à l'eau.

11. Instrument de soins personnels (10) comprenant une poignée (12) selon l'une quelconque des revendications précédentes et une tête.

12. Instrument de soins personnels (10) selon la revendication 11, dans lequel l'instrument (10) est une brosse à dents à commande électrique (10).

13. Instrument de soins personnels (10) selon la revendication 11 ou 12, dans lequel la tête peut de manière répétée être attachée à et détachée de la poignée (12).
